# EUROPEAN PATENT SPECIFICATION

(11) **EP 0 674 969 B1**
(45) Date of publication and mention of the grant of the patent: **17.02.2010**
(21) Application number: 95301225.9
(22) Date of filing: 27.02.1995
(51) Int. Cl.: B23Q 1/25, B25J 9/16

(54) **Coordinate positioning machine**
Koordinaten-Positionierungsmaschine
Machine de positionnement par coordonnées

(30) Priority: 02.03.1994 GB 9403957; 15.09.1994 GB 9418587; 21.12.1994 GB 9425887
(43) Date of publication of application: 04.10.1995
(73) Proprietor: Renishaw plc, Wotton-Under-Edge Gloucestershire GL12 8JR (GB)
(72) Inventor: McMurtry, David Roberts, Gloucestershire GL12 7EF (GB)
(74) Representative: Jackson, John Timothy

(56) References cited:
- EP-A- 0 503 712
- WO-A-91/03145
- DE-C- 3 504 464
- GB-A- 2 083 795
- 1991 IEEE International Conference on Robotics and Automation, April 9-11, 1991 Sacramento, California G. PfREUNDSCHUH
- IEEE TRANSACTIONS ON ROBOTICS AND AUTOMATION, vol. 7, no. 5, October 1991 NEW YORK, US, pages 634-641, KOK-MENG LEE 'A Three-Degrees-of-Freedom Micromotion In-Parallel Actuated Manipulator'
- INTERNATIONAL JOURNAL OF ROBOTICS RESEARCH, vol. 11, no. 2, April 1992 CAMBRIDGE MA US, pages 150-162, J. MERLET 'Direct Kinematics and Assembly Modes of Parallel Manipulators'

## Description

The invention relates to a coordinate positioning machine such as a machine tool, inspection robot, or coordinate measuring machine.

Coordinate positioning machines include a table for supporting an object upon which the machine is operating, and an arm movable relative to the table, typically with three linear degrees of freedom, which carries an operating module such as a cutting tool, an inspection probe, or a welding arm, for example. Conventional coordinate positioning machines support the movable arm either, in the case of a robot, by a plurality of serially mounted rotatable joints, or, in the case of a machine tool and coordinate measuring machine, on a plurality of serially mounted linear guideways. In each case the serial mounting of the movable arm results in different inertial loads on the machine when the movable arm is displaced in different directions, due to the differing number of moving machine parts which must be displaced to enable such movement . Additionally, any force applied to the moveable arm, for example via the operating module, will result in bending moments being applied to at least part of the structure which supports the arm.

In an alternative form of coordinate positioning machine the movable arm is supported by a plurality of members, each of which is connected to the mechanical earth of the machine, such as the table, for example. Machines of this type are known from e.g. International Patent Application Nos. WO91/03145 (Kearney & Trecker) and WO92/17313 (Geodetic Machines), European Patent Application No. 534585 (Ingersoll) and US Patent 4 732 525, and typically include a movable arm, supported relative to a fixed, or "earthed" structure by means of a plurality of telescopic struts. Movement of the movable arm is achieved by extension and, where appropriate, contraction of one or more of the struts. Further types of coordinate positioning machine are shown in US 4,976,582.

Japanese Patent Application JP-A-01-312264 shows a coordinate positioning machine comprising first and second relatively moveable structures, interconnected by a plurality of extendible and retractable drive struts. The structures are maintained parallel by a.further plurality of linkages extending between the structures. These linkages are telescopic and require complicated bevel gears at each end in order to maintain parallelism.

A coordinate positioning machine according to the present invention includes an anti-rotation device that eliminates at least two degrees of rotational freedom of one structure relative to the other, wherein said anti-rotation device includes at least one mechanical linkage connected at one end to a first one of the structures and at the other end to the other one of the structures; **characterised in that** the mechanical linkage includes a plurality of links flexurally or pivotably connected together, each link being rigid in tension and compression.

Measurement of the displacement of the arm with the available degrees of freedom may be detected, to the extent desired, in any convenient manner. When rotational movement of the arm is constrained to within the predetermined limits, detection of rotational displacement may be necessary depending upon the function which the machine is desired to perform. Linear displacement may, for example, be detected by laser triangulation, by transducers provided within the struts, or by the provision of a corresponding number of unpowered, or "passive" telescopic struts, universally pivotally connected to the arm and the fixed structure, and containing transducers.

One advantage of a machine according to the present invention is that of a simplified construction, due to a reduction in the number of telescopic struts employed. A further advantage relates to the comparative ease and simplicity of controlling movement of the arm in real time, due to the simple geometry of the device, i.e. movement of one plane (defined by the three points of connection of the three struts at one end) relative to another plane (defined by the three points of connection of the three struts at the other end). These advantages are not however essential for the performance of the invention, nor are they necessarily the only advantages of one or more of the embodiments described.

The fixed structure of the machine may be provided by a frame rigidly connected to a table of the machine, from which the supporting struts are suspended.

Embodiments of the invention will now be described, by way of example, and with reference to the accompanying drawings in which:
Fig 1 shows a plan view of a first embodiment of the present invention;
Fig 2 shows a section on the line II-II in Fig 1;
Fig 3 shows a detail of Figs 1 and 2;
Fig 4 is a plan view of a second embodiment of the present invention;
Fig 5 is a schematic perspective view of a detail of Fig 4;
Fig 6 is a perspective view of a fourth embodiment of the present invention;
Figs 7a-d illustrate the operation of a first part of the constraint of Fig 6; and
Fig 8a-d illustrate the operation of a second part of the constraint of Fig 6.

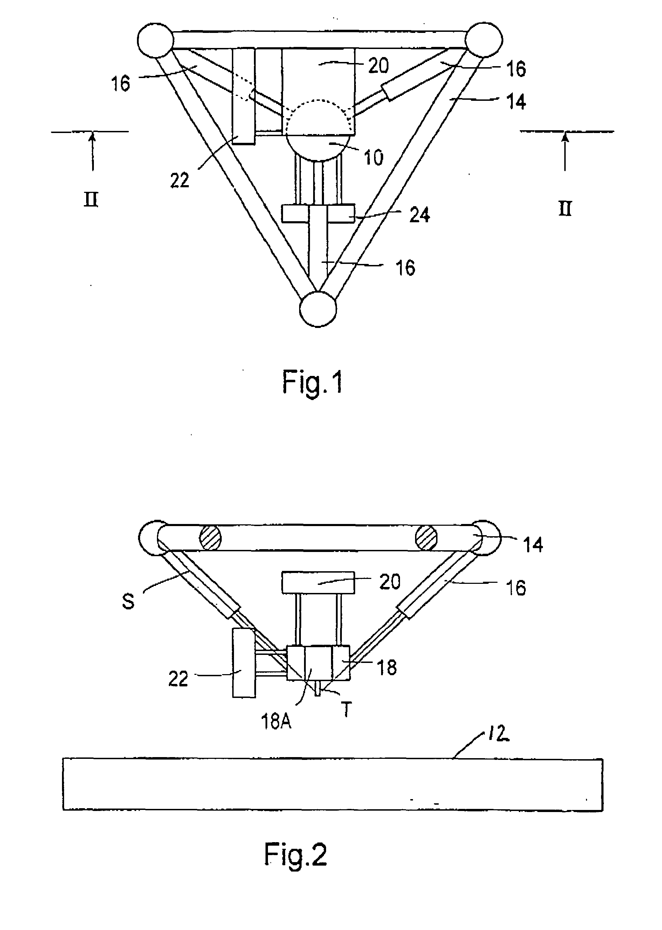

Referring now to Figs 1 and 2, a coordinate positioning machine, which in the present example is a machine tool, includes an arm 10 in the form of a spindle, movable relative to a table 12. The spindle 10 is suspended from a rigid triangular frame 14 by means of three powered telescopic supporting struts 16, which extend from the apexes of the triangular frame 14 to the spindle casing 18 (in which the spindle shaft 18A is journalled). The struts also contain transducers (not shown) which measure their length; the transducers may be provided for example by opto-electronic or magnetic encoders, LVDT's, or laser interferometers. The supporting frame 14 is rigidly mounted to the table 12 by a suitable structure which has been omitted here for clarity. Both structures, however, are part of the "mechanical earth" of the machine, and this is indicated throughout the specification by the usual symbol. The spindle shaft 18A carries an operating module in the form of a cutting tool T, for machining workpieces (although other operating modules may be used, such as touch trigger and analogue probes). Preferably, the geometry of the machine is such that the axes S of each of the supporting struts 16 intersect at the tool tip.

The connections of the supporting struts 16 to the frame 14 and the spindle casing 18 preferably permit universal pivotal motion of the struts 16 relative to the frame 14 and casing 18. Preferably, the connections provide substantially friction free movement, and may comprise magnets and fluid bearings. Alternatively, flexible linkages may be used. Suitable connections are disclosed in our co-pending International Patent Application No.PCT/GB94/02593. Translation of the spindle 10 is provided by expansion and/or contraction of the telescoping supporting struts 16; e.g. a simultaneous equal contraction of all of the supporting struts 16 will cause the spindle 10 to move in a direction indicated in Fig 2 as the Z direction, with other combinations of expansion and contraction providing movements in the X and Y directions respectively as desired.

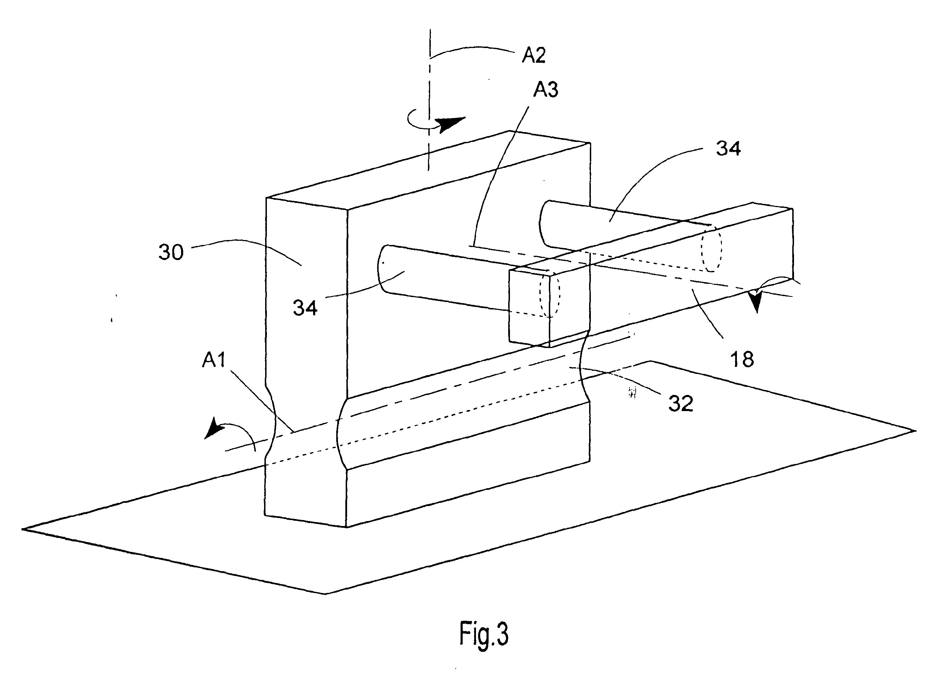

Because the spindle 10 is suspended by only three telescopic supporting struts 16, the spindle may, for a given combination of strut lengths, rotate about three perpendicular axes relative to the table 12 by virtue of the universal pivotal mounting of the struts 16 relative to the frame 14 and spindle casing 18. Movement of the spindle with each of these three degrees of rotational freedom is eliminated by the provision of an anti-rotation device having three mechanical linkages 20,22,24, which prevent rotation about the X, Y, and Z axes respectively. Each of the linkages is passive, i.e. has no motor or other actuator. One such linkage is illustrated in more detail in Fig 3. Referring now to Fig 3, an individual linkage includes a substantially rigid planar member 30, mounted to a mechanical earth of the machine, such as the supporting frame 14 or the table 12. The rigid member 30 has a region of relative weakness 32 at its base, which serves as a hinge to enable tilting of the upper part of the member 30 about an axis A1. The upper end of the member 30 is connected to the spindle casing 18 by means of two elongate rods 34, which are flexible in bending but rigid in tension and compression.

The operation of an individual linkage will now be described. Translational movement of the spindle casing 18 along the axis A3 is permitted by tilting of the member 30 about axis A1, while the resultant changing angle between the rods 34, rigid member 30 and the spindle casing 18 is accommodated by flexing of the rods 34. Translational movement of the spindle casing 18 in directions parallel to either axis A1 or axis A2 is permitted by flexing of the rods 34 in a manner similar to that of a pair of parallel leaf springs. Rotation of the spindle casing 18 about an axis parallel either to the axis A1 or to the axis A3 is permitted by flexing of the rods 34. The rigidity of the rods 34 to tension and compression, together with the relative rigidity of the member 30 prevents rotation of the spindle casing 18 about an axis parallel to axis A2. An individual linkage 20,22,24 thus permits linear movement of the spindle casing 18 in three perpendicular directions, together with rotation thereof about two perpendicular axes, while preventing rotation about a third axis.

Referring again to Figs 1 and 2 it can be seen that the combined action of all three linkages 20,22,24 eliminates all rotational movement of the spindle 10 relative to the table 12, while permitting linear movement thereof due to telescoping of the struts 16.

In a modification of the linkage shown in Fig 3 the planar member 30 is totally rigid, and a mechanical low-friction hinge is provided in the place of the area of weakness 32. Additionally the elongate rods 34 are replaced by stiff rods, universally pivotally connected to both the mechanical earth and the spindle casing 18. NB The choice of flexural or pivoting linkages depends upon a number of factors, and particularly upon the range of travel of the spindle casing 18 over which constraint , and in this particular embodiment, elimination of rotational movement of the spindle is required. Flexural linkages have the advantage of being friction and backlash free, but have the disadvantage that they are only operable over a short range; pivoting linkages are operable over a large distance, but suffer from friction and backlash.

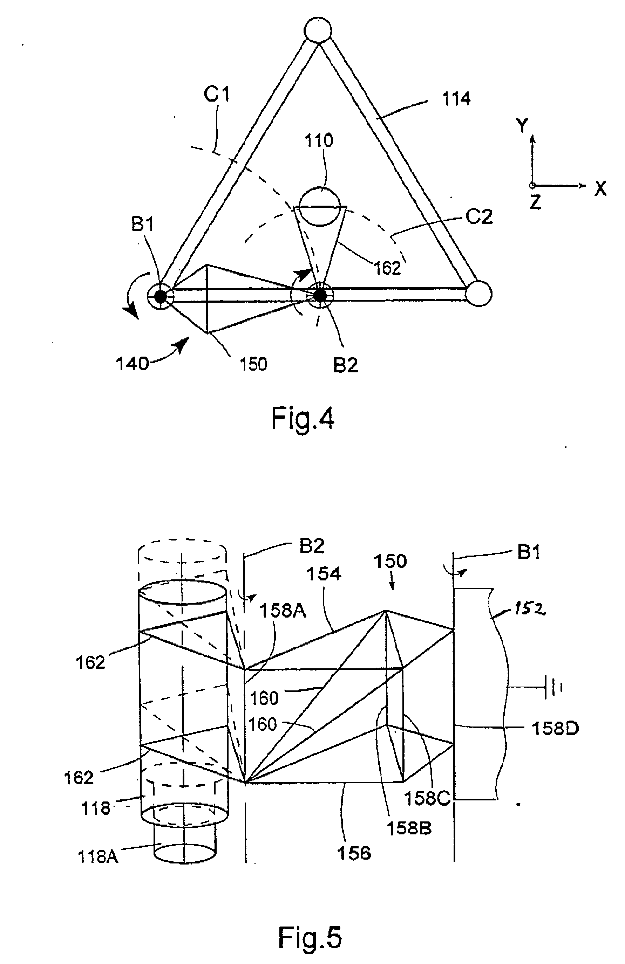

A second embodiment of the present invention will now be described with reference to Figs 4 and 5. A coordinate positioning machine in the form of a machine tool includes a supporting frame 114 rigidly mounted to a table (not shown). A moveable arm in the form of a spindle 110 is suspended from the frame 114 by means of three powered telescopic struts not shown. The struts are universally pivotally connected to the frame 114 and spindle 110, thereby allowing, for any given combination of strut lengths, rotational movement of the spindle with three degrees of freedom. Movement of the spindle with two of these rotational degrees of freedom is eliminated, and movement of the spindle with a third degree of rotational freedom is constrained to within predetermined limits by an anti-rotation device provided by a linkage 140.

The linkage 140 includes a torsionally rigid box 150, mounted by a hinge to a mechanical earth 152, thereby to enable pivoting of the box 150 about axis B1. Box 150 incudes top and bottom kite-shaped sub-frames 154,156, interconnected by four vertical rods 158A,B,C,D, and two angularly extending stanchions 160. Two triangular wishbone frames 162 are connected at their apexes to the upper and lower ends of vertical rod 158A by means of a suitable mounting providing universal pivotal motion thereof. The ends of the wishbone frames 162 remote from the rod 158A are connected to the spindle casing 118. The device thus functions in a manner similar to an elbow joint, with translation of the spindle 110 in the X and Y directions being accommodated by pivoting of the torsion box 150 about axis B1 and/or pivoting of the wishbone frames 162 about axis B2. Translation of the spindle 110 in the Z direction is accommodated by pivoting of the wishbone frames 162 as illustrated with dashed lines in Fig 5.

The mechanical earth to which the rigid box 150 is mounted is provided at the upper end of the box by the supporting frame 114, and at its lower end by the table. When the spindle 110 occupies a position centrally within the frame 114, the rigid torsion box 150 will extend underneath one of the spars of the frame 114, while the wishbones 162 will extend substantially perpendicularly thereto. The arcuate motions permitted by the hinged mounting of the rigid torsion box 150 and wishbone frames 162 are illustrated in Fig 4, and have reference numerals C1 and C2 respectively.

This anti-rotation device has the advantage of relative simplicity when compared with the device having three individual linkages 20,22,24, illustrated in Figs 1-3. However, rotation of the wishbone frames 162 through a given angle, enabling movement of the spindle to occur along the arcuate path C2 will cause a corresponding rotation of the spindle casing 118 about an axis parallel to the Z axis. This will be insignificant compared with the relatively rapid rotation of the spindle shaft 118A relative to the casing 118. (The limits to within which rotation of the spindle casing is confined are defined by the permissible range of rotation of the wishbones 162 relative to the frame 114).

If it is desired to use this construction for a coordinate measuring machine, for example, where the permissible rotation may be significant, it may be necessary to measure the extent of rotation of the arm 110 by providing transducers which determine the angular displacement about the axes B1 and B2.

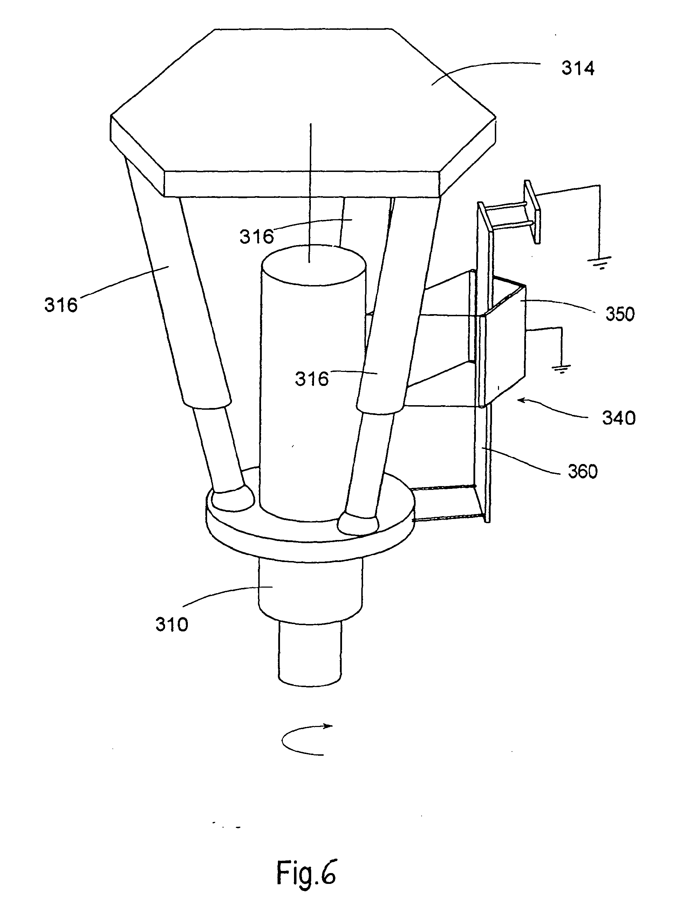

A third embodiment will now be described with reference to Figs 6 to 8. The machine includes an arm 310 moveable relative to a table, a supporting frame 314, and three powered telescopic struts 316, universally pivotally connected at their ends to the arm 310 and the supporting structure 314, thereby supporting the arm 310 in a manner which, for a given combination of strut lengths, permits rotation of the arm 310 with three degrees of freedom.

Constraint of each of these three rotational degrees freedom is provided by a passive anti-rotation device 340, which eliminates each of these degrees of rotational freedom while permitting three dimensional translation of the arm under the action of the powered struts 316. The anti-rotation device 340 acts between a mechanical earth and the movable arm 310, and includes first linkage provided by an extensible torsion box 350, which prevents rotation of the arm 310 about two mutually orthogonal axes A, B, and a second linkage 360, which prevents rotation of the arm 310 about a third axis, C, extending orthogonal to both axes A and B.

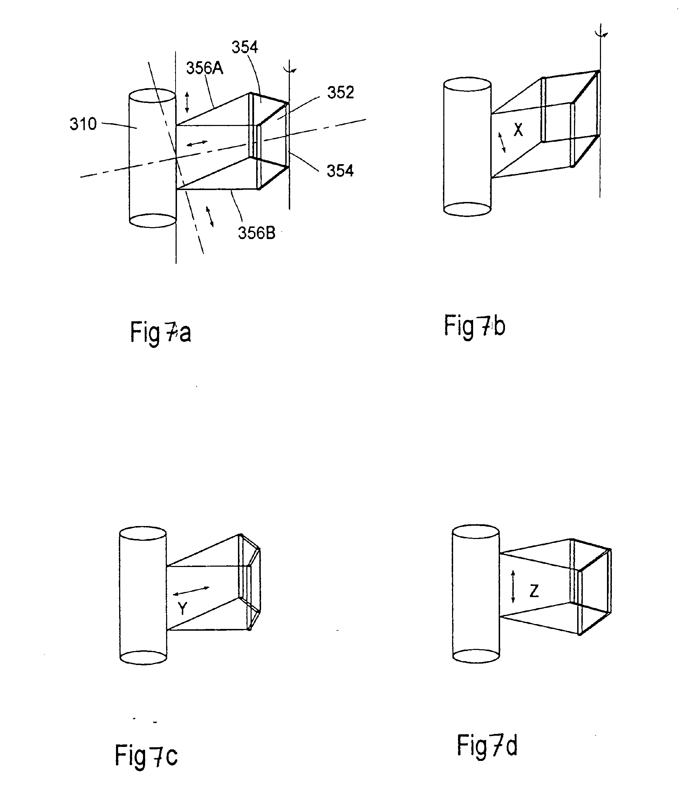

Referring now to fig.7a, the extensible torsion box 350 includes two door members 352 each of which is mounted to the mechanically earthed structure at a common hinge 354. The movable arm 310 is connected to the door members 352 at two points spaced apart in the Z-direction by means of two pairs of V-shaped connecting rods 356A,356B. Each of the pairs of connecting rods 356A,356B are universally pivotally connected (eg by ball joints) to the movable arm at their apex, with the pairs of connecting rods 356A,356B6 lying vertically in register with each other. The ends of the pairs of rods 356A,356B remote from the point of connection with the arm 310 are universally pivotally connected to the corners of free swinging edges on door members 352.

Referring now additionally to Figs 7b-d, the extensible torsion box 350 permits linear movement of the movable arm 310 in one or more of the directions X,Y, and Z, while simultaneously preventing rotation of the arm about rotational axes A and B. Movement in any one of the X,Y,and Z directions is enabled by a combination of pivoting movements of the elements 352, and 356A,356B relative to each other, and the mechanical earth. For example, referring now to fig.7b, translational movement of the movable arm 310 in the X direction is enabled by inward or outward pivoting movement of the door members 352 about hinge 354, pivoting of the connecting rods 356A,356B relative to their points of connection with the movable arm 310 and the door members 352, and additionally a swinging movement of the door members 352 about hinge 354. Referring now to Figs 7c and d, translational movement in either the Z or the Y direction is provided by a combination of either simultaneous inward or outward pivoting of the door members 352 relative to each other and about hinge 354, and pivoting movement of the connecting rods 356A,356B about their points of connection with the movable arm 310 and the door members 352.

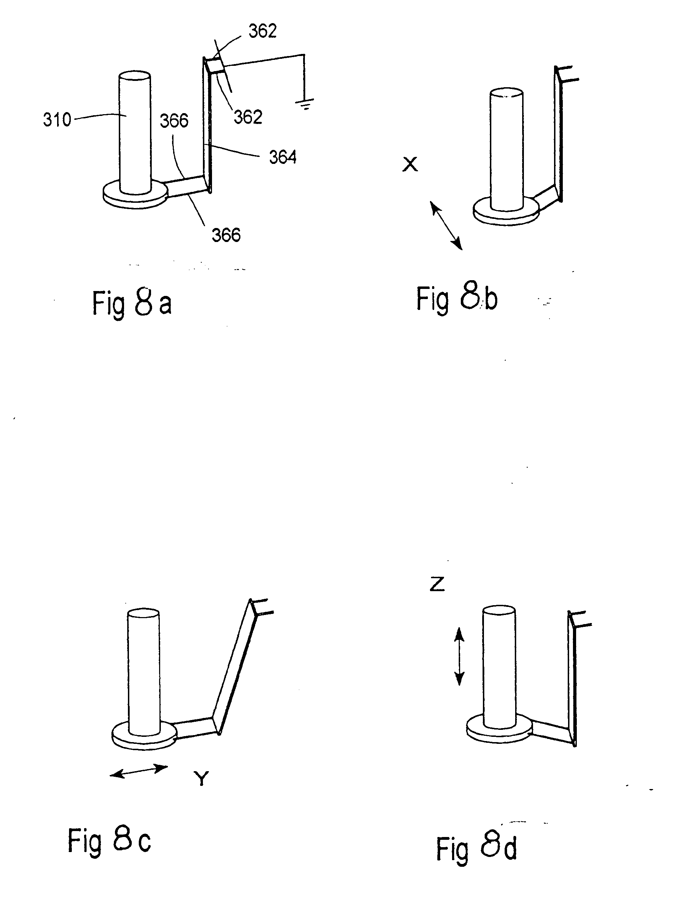

The universal pivotal connection of the rods 356A,356B to the movable arm 310 enables arcuate translational motion of the movable arm 310 about the axis C (on which the points of connection of the rods 356A,356B with the arm 310 lie) and, as a result, a corresponding limited degree of rotation of the arm 310. This minor rotational freedom of the movable arm 310 is constrained by the second linkage 360 illustrated in Figs 8a-d. Referring now to Fig. 8a, the linkage 360 includes a first pair of fixed rods 362 which are rigidly connected at one end to the mechanical earth, and are universally pivotally connected at the other by ball joints (not shown) to a further rigid door member 364. The further door member 364 is thus hinged for movement relative to the earth about an axis D. A pair of moveable rods 366 are universally pivotally connected to the lower end of further door member 364 and the moveable arm 310. The rigidity of the rods 362,366 and further door member 364 prevents rotation of the arm about the axis C, while the universal pivotal connection between the arm 310, moveable rods 366, further door member 364, and fixed rods 362 allows translational motion in the X,Y, and Z directions as illustrated in Figs 8a-d.

All rigid members of the anti-rotation device 340 which are universally pivotally mounted, may be replaced by flexural elements, as appropriate.

Machines actuated by three telescopic struts are easier to control than prior art machines with six struts. This is because the mathematics involved in controlling the motion of the movable arm is simpler. In particular, the algorithms required to determine the position of the arms are now based only upon three linear measurements, rather than six.

## Claims

1. A coordinate positioning machine, comprising:
first and second relatively moveable structures (10,14;110,114;210,214;310,314;410,414) interconnected by three extensible and retractable struts (16;216;316), each of the struts being connected to the first and second structures by first and second pivotal mountings respectively, the mountings enabling pivoting motion of the struts relative to the structures with at least two degrees of rotational freedom;
each of the struts having a length defined by a distance between the respective first and second pivotal mountings, relative translational motion of the first and second structures being actuated by a change in length of one or more of the struts; and
an anti-rotation device (20;150;340;470,480) that eliminates at least two degrees of rotational freedom of the first structure relative to the second structure;
wherein said anti-rotation device includes at least one mechanical linkage (30,34;150,162;340;470,480) connected at one end to a first one of the structures and at the other end to the other one of the structures;
**characterised in that** the mechanical linkage includes a plurality of links (34;154,156,162;352,356A,356B) flexurally or pivotably connected together, each link being rigid in tension and compression.

2. A coordinate positioning machine according to claim 1, **characterised in that** the anti-rotation device comprises two mechanical linkages (350,360) and eliminates all three degrees of rotational freedom of the moveable structure relative to the fixed structure.

3. A coordinate positioning machine according to claim 1, **characterised in that** the anti-rotation device comprises three mechanical linkages (30,34;352,356A,356B,364,366), and eliminates three degrees of rotational freedom of the moveable structure relative to the fixed structure.

4. A coordinate positioning machine according to claim 1, 2 or 3 **characterised by** three transducers for measuring displacement of the moveable structure relative to the fixed structure, each of the transducers acting between the fixed structure and the moveable structure.

5. A coordinate positioning machine according to claim 4, wherein the transducers are independent of the struts.

6. A coordinate positioning machine according to any one of the preceding claims,
wherein the first structure is fixed and the second structure is moveable relative thereto.

7. A coordinate positioning machine according to any one of the preceding claims **characterised in that** the mechanical linkage comprises a first link (30;150;354;364) pivotally connected to the first structure and a second link (34;162;356A;356B;366) pivotally connected at one of its ends to the second structure and at the other one of its ends to the first link.

8. A coordinate positioning machine according to claim 7 **characterised in that** the first link (30;150;350) is connected to the first structure by means of a pivot which allows only one degree of rotational freedom.

9. A coordinate positioning machine according to claim 8 **characterised in that** the second link comprises a pair of struts (34;162;356A;356B) each of which is universally pivotally connected to both the first link and to the second structure with two degrees of rotational freedom.

10. A coordinate positioning machine according to claim 7, 8 or 9 **characterised in that** the first link comprises a rigid door member (30;352).

11. A coordinate positioning machine according to any one of claims 1 to 6, **characterised in that** said at least one mechanical linkage comprises a torsionally rigid box connected to one of the structures by a hinge which allows one degree of rotational freedom of the box, and a pair of links which are each universally pivotally mounted at one end to the box and at the other end to the other of the structures.

12. A coordinate positioning machine according to claim 11 **characterised in that** each of the links of said pair comprises a triangular frame.

13. A coordinate positioning device according to claim 11 or 12 wherein one of the structures is a fixed structure, the other one of the structures is a movable structure, **characterised in that** the box is pivotally connected to the fixed structure by means of said hinge.

14. A coordinate positioning device according to claim 11, 12 or 13 **characterised in that** the torsionally rigid box includes two door members both of which are independently pivotally connected to the first structure by a hinge, and two pairs of connecting rods, each of said rods being universally pivotally connected at one of its ends to a door member and at the other of its ends to the second structure.

15. A coordinate positioning machine according to claim 1 **characterised in that** each mechanical linkage comprises a torsionally rigid member mounted by a hinge to one of the structures, and a pair of links, each of the links of a said pair of links being connected at one of its ends to the torsionally rigid member and at the other of its ends to the other one of the structures.

16. A coordinate positioning machine according to claim 15 wherein one of the structures is a fixed structure and the other one of the structures is a moveable structure to which an operating module may be connected, **characterised in that** the torsionally rigid member is mounted by said hinge to the fixed structure to allow only one degree of rotational freedom of said member relative to the fixed structure.

17. A coordinate positioning machine according to claim 16 **characterised in that** said at least one mechanical linkage comprises two torsionally rigid members each of which is pivotally mounted by a hinge to the fixed structure and each of which is connected by a pair of links to the moveable structure.

18. A coordinate positioning machine according to claim 17 **characterised in that** the torsionally rigid members are pivotally mounted to the fixed structure at a common hinge.

19. A coordinate positioning machine according to claim 17 **characterised in that** the torsionally rigid members are door members each of which is pivotably mounted to the fixed structure at a common hinge.

20. A coordinate positioning machine according to claim 17 **characterised in that** said at least one mechanical linkage comprises three torsionally rigid members each of which is pivotally mounted with one degree of rotational freedom to the fixed structure, and three pairs of struts connected between the moveable members and the torsionally rigid members.

## Patentansprüche

1. Koordinatcnpositionierungsmaschine, umfassend:
einen ersten und zweiten relativ bewegbaren Aufbau (10, 14; 110, 114; 210, 214; 310, 314; 410, 414), die durch drei ausfahrbare und zurückziehbare Streben (16; 216; 316) miteinander verbunden sind, wobei jede der Streben mit dem ersten und zweiten Aufbau durch eine erste bzw. zweite Drehbefestigung verbunden ist, wobei die Befestigungen eine Drehbewegung der Streben relativ zu den Aufbauten mit zumindest zwei Rotationsfrciheitsgraden ermöglichen;
wobei jede der Streben eine Länge besitzt, die durch eine Distanz zwischen der jeweiligen ersten und zweiten Drehbefestigung definiert ist, wobei eine relative Translationsbewegung des ersten und zweiten Aufbaus durch eine Änderung der Länge von einer oder mehreren der Streben betätigt wird; und
eine Antirotationsvorrichtung (20; 150; 340; 470, 480), die zumindest zwei Rotationsfreiheitsgrade des ersten Aufbaus relativ zu dem zweiten Aufbau beseitigt;
wobei die Antirotationsvorrichtung zumindest eine mechanische Koppelung (30, 34; 150, 162; 340; 470, 480) aufweist, die mit einem Ende an einem ersten der Aufbauten und mit dem anderen Ende an dem anderen der Aufbauten verbunden ist;
**dadurch gekennzeichnet, dass**
die mechanische Koppelung mehrere Glieder (34; 154, 156, 162; 352, 356A, 356B) aufweist, die biegsam oder drehbar miteinander verbunden sind, wobei jedes Glied hinsichtlich Spannung und Kompression starr ist.

2. Koordinatenpositionierungsmaschine nach Anspruch 1,
**dadurch gekennzeichnet, dass**
die Antirotationsvorrichtung zwei mechanische Koppelungen (350, 360) umfasst und alle drei Rotationsfreiheitsgrade des bewegbaren Aufbaus relativ zu dem fixierten Aufbau beseitigt.

3. Koordinatenpositionierungsmaschine nach Anspruch 1,
**dadurch gekennzeichnet, dass**
die Antirotationsvorrichtung drei mechanische Koppelungen (30, 34; 352, 356A, 356B, 364, 366) umfasst und drei Rotationsfreiheitsgrade des bewegbaren Aufbaus relativ zu dem fixierten Aufbau beseitigt.

4. Koordinatenpositionierungsmaschine nach einem der Ansprüche 1, 2 oder 3,
**gekennzeichnet durch**
drei Wandler zur Messung einer Verstellung des bewegbaren Aufbaus relativ zu dem fixierten Aufbau, wobei jeder der Wandler zwischen dem fixierten Aufbau und dem bewegbaren Aufbau wirkt.

5. Koordinatenpositionierungsmaschine nach Anspruch 4,
wobei die Wandler unabhängig von den Streben sind.

6. Koordinatenpositionierungsmaschine nach einem der vorhergehenden Ansprüche,
wobei der erste Aufbau fixiert ist und der zweite Aufbau relativ dazu bewegbar ist.

7. Koordinatenpositionierungsmaschine nach einem der vorhergehenden Ansprüche,
**dadurch gekennzeichnet, dass**
die mechanische Koppelung ein erstes Glied (30; 150; 354; 364), das drehbar mit dem ersten Aufbau verbunden ist, und ein zweites Glied (34; 162; 356A; 356B; 366) umfasst, das an einem seiner Enden mit dem zweiten Aufbau und an dem anderen seiner Enden mit dem ersten Glied drehbar verbunden ist.

8. Koordinatenpositionierungsmaschine nach Anspruch 7,
**dadurch gekennzeichnet, dass**
das erste Glied (30; 150; 350) mit dcm ersten Aufbau mittels einer Drehverbindung verbunden ist, die nur einen einzelnen Rotationsfreiheitsgrad zulässt.

9. Koordinatenpositionierungsmaschine nach Anspruch 8,
**dadurch gekennzeichnet, dass**
das zweite Glied ein Paar von Streben (34; 162; 356A, 356B) umfasst, von denen jede universell drehbar mit sowohl dem ersten Glied als auch dem zweiten Aufbau mit zwei Rotationsfreiheitsgraden verbunden ist.

10. Koordinatenpositionierungsmaschine nach einem der Ansprüche 7, 8 oder 9,
**dadurch gekennzeichnet, dass**
das erste Glied ein starres Türelement (30; 352) umfasst.

11. Koordinatenpositionierungsmaschine nach einem der Ansprüche 1 bis 6,
**dadurch gekennzeichnet, dass**
die zumindest eine mechanische Koppelung einen torsionssteifen Kasten, der mit einem der Aufbauten durch ein Gelenk verbunden ist, das einen einzelnen Rotationsfreiheitsgrad des Kastens zulässt, und ein Paar von Gliedern umfasst, die jeweils universell drehbar mit einem Ende an dem Kasten und mit dem anderen Ende an dem anderen der Aufbauten angebracht sind.

12. Koordinatenpositionierungsmaschine nach Anspruch 11,
**dadurch gekennzeichnet, dass**
jedes der Glieder des Paares einen Dreieckrahmen umfasst.

13. Koordinatenpositionierungsvorrichtung nach Anspruch 11 oder 12,
wobei einer der Aufbauten ein fixierter Aufbau ist, der andere der Aufbauten ein bewegbarer Aufbau ist,
**dadurch gekennzeichnet, dass**
der Kasten mittels des Gelenks drehbar mit dem fixierten Aufbau verbunden ist.

14. Koordinatcnpositionierungsvorrichtung nach einem der Ansprüche 11, 12 oder 13,
**dadurch gekennzeichnet, dass**
der torsionssteife Kasten zwei Türelemente, die beide unabhängig drehbar mit dem ersten Aufbau durch ein Gelenk verbunden sind, und zwei Paare von Verbindungsstangen aufweist, wobei jede der Stangen universell drehbar mit einem ihrer Enden mit einem Türelement und mit dem anderen ihrer Enden mit dem zweiten Aufbau verbunden ist.

15. Koordinatenpositionierungsmaschine nach Anspruch 1,
**dadurch gekennzeichnet, dass**
jede mechanische Koppelung ein torsionssteifes Element, das durch ein Gelenk an einem der Aufbauten angebracht ist, und ein Paar von Gliedern umfasst, wobei jedes der Glieder des Paares von Gliedern an einem seiner Enden mit dem torsionssteifen Element und an dem anderen seiner Enden mit dem anderem der Aufbauten verbunden ist.

16. Koordinatenpositionierungsmaschine nach Anspruch 15,
wobei einer der Aufbauten ein fixierter Aufbau ist und der andere der Aufbauten ein bewegbarer Aufbau ist, mit dem ein Betriebsmodul verbunden werden kann,
**dadurch gekennzeichnet, dass**
das torsionssteife Element durch das Gelenk an dem fixierten Aufbau angebracht ist, um nur einen einzelnen Rotationsfreiheitsgrad des Elementes relativ zu dem fixierten Aufbau zuzulassen.

17. Koordinatenpositionierungsmaschine nach Anspruch 16,
**dadurch gekennzeichnet, dass**
die zumindest eine mechanische Koppelung zwei torsionssteife Elemente umfasst, von denen jedes drehbar durch ein Gelenk an dem fixierten Aufbau angebracht ist und jedes durch ein Paar von Gliedern mit dem bewegbaren Aufbau verbunden ist.

18. Koordinatenpositionierungsmaschine nach Anspruch 17,
**dadurch gekennzeichnet, dass**
die torsionssteifen Elemente mit einem gemeinsamen Gelenk drehbar an dem fixierten Aufbau angebracht sind.

19. Koordinatenpositionierungsmaschine nach Anspruch 17,
**dadurch gekennzeichnet, dass**
die torsionssteifen Elemente Türelemente sind, von denen jedes drehbar an dem fixierten Aufbau mit einem gemeinsamen Gelenk angebracht ist.

20. Koordinatenpositionierungsmaschine nach Anspruch 17,
**dadurch gekennzeichnet, dass**
die zumindest eine mechanische Koppelung drei torsionssteife Elemente, von denen jedes drehbar mit einem einzelnen Rotationsfreiheitsgrad an dem fixierten Aufbau angebracht ist, und drei Paare von Streben umfasst, die zwischen den bewegbaren Elementen und den torsionssteifen Elementen verbunden sind.

## Revendications

1. Machine de positionnement par coordonnées comprenant :
une première structure et une seconde structure relativement mobiles (10,14;110,114;210,214;310,314;410,414) raccordées par trois jambes extensibles et rétractables (16;216;316), chacune des jambes étant raccordée respectivement à la première et à la seconde structures par une première et
une seconde montures pivotantes, les montures permettant un mouvement de pivotement des jambes par rapport aux structures avec au moins deux degrés de liberté de rotation ;
chacune des jambes ayant une longueur définie par une distance entre la première et la seconde montures pivotantes respectives, le mouvement de translation relatif de la première et de la seconde structures étant effectué par un changement de longueur d'une ou plusieurs des jambes ; et
un dispositif anti-rotation (20;150;340;470,480) qui élimine au moins deux degrés de liberté de rotation de la première structure par rapport à la seconde structure ;
dans lequel ledit dispositif anti-rotation comprend au moins un ensemble articulé mécanique (30,34;150,162;340;470,480) raccordé par une extrémité à une première des structures et par l'autre extrémité à l'autre de ces structures ;
se caractérisant en cela que l'ensemble articulé mécanique comporte une pluralité de liaisons (34;154,156,162;352,356A,356B) raccordées ensemble pour fléchir ou pivoter, chaque liaison étant rigide en tension et compression.

2. Machine de positionnement par coordonnées conforme à la revendication 1, qui se caractérise en cela que le dispositif anti-rotation comprend deux ensembles articulés mécaniques (350,360) et élimine chacun des trois degrés de liberté de rotation de la structure mobile par rapport à la structure fixe.

3. Machine de positionnement par coordonnées conforme à la revendication 1 qui se caractérise en cela que le dispositif anti-rotation comprend trois ensembles articulés mécaniques (30,34;352,356A,356B,364,366) et élimine trois degrés de liberté de rotation de la structure mobile par rapport à la structure fixe.

4. Machine de positionnement par coordonnées conforme à la revendication 1, 2 ou 3 **caractérisée par** trois capteurs pour mesurer le déplacement de la structure mobile par rapport à la structure fixe, chacun des capteurs opérant entre la structure fixe et la structure mobile.

5. Machine de positionnement par coordonnées conforme à la revendication 4 dans laquelle les capteurs sont indépendants des jambes.

6. Machine de positionnement par coordonnées conforme à l'une quelconque des revendications précédentes dans laquelle la première structure est fixe et la seconde structure peut être déplacée par rapport à la première.

7. Machine de positionnement par coordonnées conforme à l'une quelconque des revendications précédentes qui se caractérise en cela que l'ensemble articulé mécanique comprend une première liaison (30;150;354;364) raccordée de manière pivotante à la première structure et une seconde liaison (34;162;356A;356B;366) raccordée de manière pivotante par une de ses extrémités à la seconde structure et par l'autre de ses extrémités à la première liaison.

8. Machine de positionnement par coordonnées conforme à la revendication 7 qui se caractérise en cela que la première liaison (30; 150; 350) est raccordée à la première structure au moyen d'un pivot qui n'autorise qu'un seul degré de liberté de rotation.

9. Machine de positionnement par coordonnées conforme à la revendication 8 qui se caractérise en cela que la seconde liaison comprend une paire de jambes (34;162;356A;356B) chacune d'entre elles étant raccordée de manière universellement pivotante à la fois à la première liaison et à la seconde liaison avec deux degrés de liberté de rotation.

10. Machine de positionnement par coordonnées conforme à la revendication 7, 8 ou 9 qui se caractérise en cela que la première liaison comporte un organe de porte rigide (30;352).

11. Machine de positionnement par coordonnées conforme à l'une quelconque des revendications 1 à 6 qui se caractérise en cela que le(s) dit(s) ensemble(s) mécanique(s) comprend/comprennent un boîtier rigide en torsion raccordé à une de structures, par une articulation qui autorise un degré de liberté de rotation du boîtier, et une paire de liaisons qui sont chacune montées de manière universellement pivotante à une extrémité au boîtier et par l'autre extrémité à l'autre de ces structures.

12. Machine de positionnement par coordonnées conforme à la revendication 11 qui se caractérise en cela que chacune des liaisons de ladite paire comprend un cadre triangulaire.

13. Machine de positionnement par coordonnées conforme à la revendication 11 ou 12 dans laquelle une des structures est une structure fixe, l'autre de ces structures est une structure mobile, qui se caractérise en cela que le boîtier est raccordé de manière pivotante à la structure fixe au moyen de ladite articulation.

14. Machine de positionnement par coordonnées conforme à la revendication 11, 12 ou 13 qui se caractérise en cela que le boîtier rigide en torsion comprend deux organes de porte tous deux raccordés, pour pivoter indépendamment, à la première structure par une articulation, et deux paires de tiges de connexion, chacune desdites tiges étant raccordée de manière universellement pivotante par l'une de ses extrémités à un organe de porte et par l'autre de ses extrémités à la seconde structure.

15. Machine de positionnement par coordonnées conforme à la revendication 1 qui se caractérise en cela que chaque ensemble articulé mécanique comprend un organe rigide en torsion monté par une articulation à l'une des structures, et une paire de liaisons, chacune des liaisons de ladite paire de liaisons étant raccordée par l'une de ses extrémités à l'organe rigide en torsion et par l'autre de ses extrémités à l'autre de ces structures.

16. Machine de positionnement par coordonnées conforme à la revendication 15 dans laquelle une des structures est une structure fixe et l'autre de ces structures étant une structure mobile à laquelle un module opérationnel peut être raccordé, qui se caractérise en cela que l'organe rigide en torsion est monté par ladite articulation à la structure fixe pour ne permettre qu'un seul degré de liberté de rotation dudit organe par rapport à la structure fixe.

17. Machine de positionnement par coordonnées conforme à la revendication 16 qui se caractérise en cela qu'au moins un ensemble articulé mécanique comprend deux organes rigides en torsion chacun d'eux étant monté de manière pivotante par une articulation à la structure fixe et chacun d'eux étant raccordé par une paire de liaisons à la structure mobile.

18. Machine de positionnement par coordonnées conforme à la revendication 17 qui se caractérise en cela que les organes rigides en torsion sont montés de manière pivotante à la structure fixe au niveau d'une articulation commune.

19. Machine de positionnement par coordonnées conforme à la revendication 17 qui se caractérise en cela que les organes rigides en torsion sont des organes de porte, chacun étant monté de manière pivotante à la structure fixe au niveau d'une articulation commune.

20. Machine de positionnement par coordonnées conforme à la revendication 17 qui se caractérise en cela qu'au moins un ensemble articulé mécanique comprend trois organes rigides en torsion chacun d'entre eux étant monté de manière pivotante avec un degré de liberté de rotation à la structure fixe et trois paires de jambes raccordées entre les organes mobiles et les organes rigides en torsion.
